# EUROPEAN PATENT APPLICATION

(11) **EP 1 629 875 A1**
(43) Date of publication of application: **01.03.2006**
(21) Application number: 04730638.6
(22) Date of filing: 30.04.2004
(51) Int. Cl.: B01D 29/00, B01D 35/01

(54) **FILTER UNIT WITH DEAERATING MECHANISM**

(30) Priority: 01.05.2003 JP 2003126461
(71) Applicant: Entegris, Inc., Chaska, Minnesota 55318 (US)
(72) Inventor: NOMURA, Yoshiki, c/o Nihon Mykrolis K.K., Tokyo 1080073 (JP)
(74) Representative: Gambell, Derek
(86) International application number: PCT/JP2004/005842
(87) International publication number: WO 2004/096410

(57) **Abstract**

To achieve space saving and cost reduction by solving a problem with a conventional treatment fluid filtration device wherein a deaerating device and a solid particle filter device were required separately.

A filter unit comprises a head part 3 having a treatment fluid inlet port 5, a filtrated fluid delivery port 7, and a deaerating suction port 9; a housing 1 integrally or detachably connected, in a fluid-tight manner, to the head part; a plurality of deaerating hollow fibers 33, which is housed in the housing on the upstream side; and a filter element 13 housed in the housing on the downstream side of the deaerating hollow fibers. The inlet port 5 communicates with the outer surface side of the hollow fibers 33. The delivery port communicates with the downstream side of the filter element 13. The suction port 9 communicates with an internal passage of the hollow fibers 33.

## Description

### Technical Field

The present invention relates to a single filter unit which is used by being attached to a filtration device simultaneously requiring deaeration when a liquid containing air bubbles of hydrogen peroxide etc. is filtrated, and performs filtration and deaeration treatments at the same time.

### Background Art

In a photoresist process in the semiconductor industry or in processes in which developing, coating, cleaning, etc. are carried out by supplying a treatment fluid such as a chemical and a pure water cleaning fluid, it is often required to remove particles, foreign matters, and a dissolved gas such as hydrogen peroxide and oxygen carbonic acid or air bubbles. If air bubbles are present, poor treatment occurs. Therefore, in addition to a filter device for removing solid matters such as particles, a deaerating device for sucking and filtrating a gas is used (for example, Japanese Patent Application Laying Open (KOKAI) No. 5-192658 filed by Millipore Corp., Japanese Patent Application Laying Open (KOKAI) No. 2000-15246 filed by Kikuchi, Japanese Patent Application Laying Open (KOKAI) No. 11-47508 filed by Fuji Photo Film Co., Ltd., and Japanese Patent Application Laying Open (KOKAI) No. 9-29251 filed by Kurita Water Industries Ltd.).

In these techniques, separate deaerating device and filter device are used by being connected in series. In the deaerating device, a pressurized treatment fluid is allowed to flow along one surface of a gas perm eable membrane, and the other surface side is connected to a low pressure source such as a suction pump to remove the air bubbles and dissolved gas. The deaerated treatment fluid is supplied to the filter device, and is filtrated by a solid particle separating filter membrane.
Patent Document 1: Japanese Patent Application Laying Open (KOKAI) No. 5-192658
Patent Document 2: Japanese Patent Application Laying Open (KOKAI) No. 2000-15246
Patent Document 3: Japanese Patent Application Laying Open (KOKAI) No. 11-47508
Patent Document 4: Japanese Patent Application Laying Open (KOKAI) No. 9-29251

### Disclosure of the Invention

In the above-described conventional technique, since separate deaerating device and filter device are used by being connected in series, there arises a problem in that the manufacturing cost is high, the installation space is large, and moreover the cost required for maintenance is high.

The present invention has been made in view of the above circumstances, and accordingly an object thereof is to reduce the manufacturing cost for a device, to decrease the installation space, and to save labor and time required for the exchange of device.

To achieve the above object, the present invention provides a filter unit including a head part having a treatment fluid inlet port, a filtrated fluid delivery port, and a deaerating suction port; a housing integrally or detachably connected, in a fluid-tight manner, to the head part; a deaerating part including a plurality of deaerating hollow fibers, which is housed in the housing; and a filter element housed in the housing on the upstream or downstream side of the deaerating part, wherein the inlet port communicates with the upstream side of the housing; the delivery port communicates with the downstream side of the housing; and the suction port communicates with an internal passage of the hollow fibers.

In the filter unit in accordance with the present invention, the pressurized treatment fluid flows from the inlet port in the head part to the upstream side of the housing, and, in the case where the deaerating hollow fibers are present on the upstream side, it flows around the hollow fibers. Since the interior of the hollow fibers is connected to a low pressure source such as a suction pump through the suction port, a gas dissolved in the treatment solution and air bubbles permeate a membrane of the deaerating hollow fibers, and is drawn out to the outside of the unit through the internal passage of the hollow fibers. The treatment fluid from which the gas has been removed is then filtrated by the filter element for separating solid matters such as particles. The solid matters are trapped by the upstream-side surface of a filter material of the filter element and held, and the permeating fluid comes out to the delivery port in the head part as a filtrated fluid.

Alternatively, in the filter unit in accordance with the present invention, the pressurized treatment fluid flows from the inlet port in the head part to the upstream side of the housing, and, in the case where the filter element is present on the upstream side, it is filtrated by the filter element for separating solid matters such as particles. The solid matters are trapped by the upstream-side surface of the filter material of the filter element and held, and the permeating fluid flows around the deaerating hollow fibers as a filtrated fluid. Since the interior of the hollow fibers is connected to a low pressure source such as a suction pump through the suction port, a gas dissolved in the treatment solution and air bubbles permeate the membrane of the deaerating hollow fibers, and is drawn out to the outside of the unit through the internal passage of the hollow fibers. The filtrated fluid from which the gas has been removed then comes out to the delivery port in the head part.

Thus, in the present invention, the deaeration and filtration of treatment fluid can be carried out in a single housing without using separate devices. Therefore, despite a compact device, a highly efficient filter unit can be provided, and labor and time required for manufacture, exchange, and maintenance can be saved.

As described above, the present invention enables the deaeration and filtration to be carried out in a single housing. Therefore, despite a compact device, the filtering work and the deaerating work are performed continuously, so that a highly efficient filter unit can be provide d.

In a preferred mode, the hollow fibers are supported fixedly by a column and upper and lower large-diameter parts. Therefore, handling is easy, the assembling work can also be performed merely by inserting the deaerating part into the filter unit, and the hollow fiber bundle is located on the inside of the outer peripheries of the upper and lower large-diameter parts, so that a chance that the hollow fibers are damaged during the assembling process is reduced.

In another preferred mode, on the upper end side of the column, there are provided a longitudinal passage aligned with a treatment fluid inlet flow path in a header part and a plurality of transverse passages that extend radially from the longitudinal passage and open to the peripheral surface of the column. Therefore, the treatment fluid can be supplied to the whole of the hollow fibers, so that the efficiency of deaeration can be increased.

In another preferred mode, the lower end portion of the hollow fibers is sealingly embedded in the large-diameter part of the lower end portion; the upper end portion of the hollow fibers is embedded in the large-diameter part of the upper end portion in a penetrating state; and internal holes of hollow fibers communicate with the suction port. Therefore, the treatment fluid and the gas in the internal passage of the hollow fibers flow in the counterflow direction, so that more efficient deaeration can take place.

In a preferred mode, around the hollow fibers, a cylinder forming a flow path for the treatment fluid is provided between the column and the hollow fibers; in the lower end portion of the cylinder, a plurality of openings are provided to gu ide the deaerated treatment fluid to the filter element; and further the outer surface of the cylinder has distribution passages that are arranged in a lattice form to guide the deaerated treatment fluid to the upstream-side surface of the filter element. According to this configuration, the treatment fluid is kept in contact with the hollow fibers from the upper end to the lower end thereof while being restrained by the peripheral surface of the hollow fibers, thereby being deaerated sufficiently, and then is guided to the filter element on the downstream side. Further, the cylinder not only forms the flow path of the deaerating part but also serves as the distribution passage for the treatment fluid to the filtering part. Also, the cylinder serves as a support body for the filtration material. It will be apparent that even when the filtration part formed by the filter element is provided on the upstream side and the deaerating part formed by the hollow fibers is provided on the downstream side so that the flow is reverse, the same operation and effects can be achieved.

### Brief Description of the Drawings

Figure 1 is a central longitudinal sectional view of a filter unit of the present invention including a deaerating part formed by hollow fibers and a filter element for separating solid matters such as particles;
Figure 2 is a sectional view showing a construction of a deaerating part consisting mainly of a plurality of hollow fibers in accordance with the present invention;
Figure 3 is a plan view of the deaerating part shown in Figure 2;
Figure 4 is a sectional view taken along the line IV-IV of Figure 2;
Figure 5 is a front view of a cylindrical part used in the present invention;
Figure 6 is a plan view of the cylindrical part shown in Figure 5;
Figure 7 is a sectional view taken along the line VII-VII of Figure 6;
Figure 8 is a sectional view taken along the line VIII-VIII of Figure 5;
Figure 9 is a sectional view taken along the line IX-IX of Figure 5; and
Figure 10 is a schematic enlarged sectional view of an essential portion of Figure 1.

### Best Mode for Carrying Out the Invention

In a preferred mode, a deaerating part includes a column extending vert ically along the axis of housing, large-diameter parts integrally formed in the upper and lower portions of the column, and a plurality of hollow fibers which are supported by the upper and lower large-diameter parts and extend along the column.

According to this construction, the hollow fibers are easy to handle because they are supported fixedly by the column and the upper and lower large-diameter parts, the assembling work can also be performed merely by inserting the deaerating part into a filter unit, and the hollow fibers are located on the inside of the outer peripheries of the upper and lower large-diameter parts. Therefore, a chance that the hollow fibers are damaged during the assembling process is reduced.

Preferably, on the upper end side of the column, there are provided a longitudinal passage aligned with a treatment fluid inlet flow path in a header part and a plurality of transverse passages that extend radially from the lower end of the longitudinal passage and open to the peripheral surface of the column. Thereby, a treatment fluid can be allowed to flow along the hollow fibers from the upper end portion of the hollow fibers, which can prolong the period of time when the treatment fluid is in contact with the hollow fibers, so that the efficiency of deaeration can be increased.

Preferably, the lower end portion of the hollow fibers is embedded in the large-diameter part of the lower end portion and is sealed; the upper end portion of the hollow fibers is embedded in the large-diameter part in the upper end portion in a penetrating state; and internal holes of hollow fibers communicate with the suction port. According to this configuration, the treatment fluid and the gas in an internal passage of the hollow fibers flow in the counterflow direction, so that highly efficient deaeration can take place.

Preferably, around the hollow fibers, a cylinder forming a flow path for a treatment fluid is provided between the column and the hollow fibers; in the lower end portion of the cylinder, a plurality of openings are provided to guide the deaerated treatment fluid to the filter element; and further the outer surface of the cylinder has distribution passages that are arranged in a lattice form to guide the deaerated treatment fluid to the upstream-side surface of the filter element. According to this configuration, the treatment fluid is kept in contact with the hollow fibers from the upper end to the lower end thereof while being restrained by the peripheral surface of the hollow fibers, thereby being deaerated efficiently, and then is guided to the filter element on the downstream side.

The filter element for removing solid matters such as particulate substances is made up of a pleated filtering material arranged on the outer peripheral surface of the cylinder; porous external cylinders arranged around the filtering material; and an upper lid and a lower lid that seal the upper and lower ends of the filtering material in a fluid-tight manner, respectively, and the inner surface of the filtering material is supported by the outer peripheral surface of the cylinder forming a flow path for the treatment fluid. According to this configuration, the cylinder not only forms the flow path of the deaerating part but also serves as the distribution passage for the treatment fluid to the filtering material. Also, the cylinder serves as a support body for the filtering material.

As described above, in the embodiment of the present invention, the configuration may be such that the deaerating part formed by the hollow fibers is provided on the upstream side, and the filtration part forme d by the filter element is provided on the downstream side. Even if the filtration part formed by the filter element is provided on the upstream side, and the deaerating part formed by the hollow fibers is provided on the downstream side, the filter unit operates in the same way.

Thereupon, if the inlet port and the delivery port are connected reversely so that the inlet port is used as the delivery port and the delivery port is used as the inlet port in the above-described embodiment, this embodiment can be implemented.

### Example

A preferred example of the present invention will be described in detail with reference to the accompanying drawings.

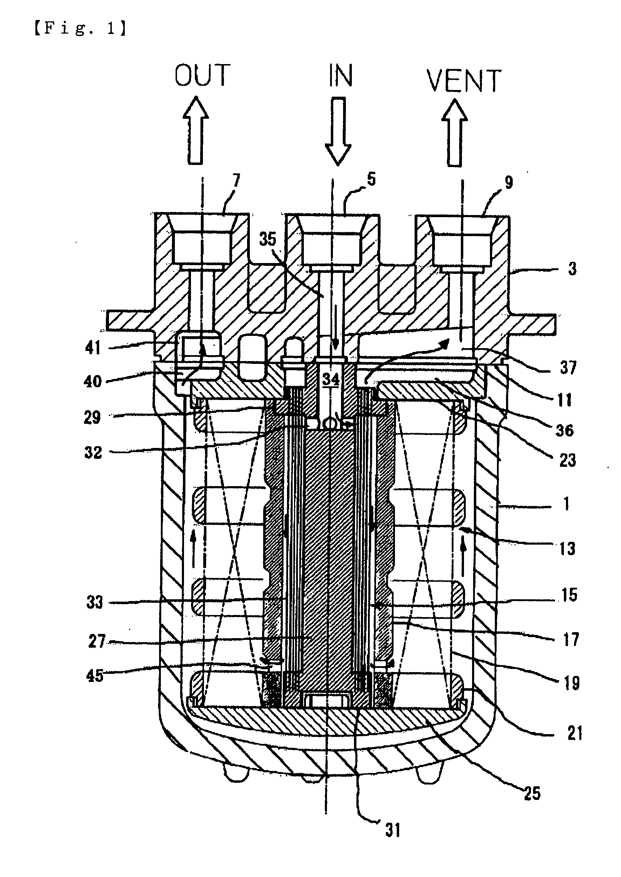

Figure 1 is a sectional view of a filter unit of an integral type of deaeration and filtration in accordance with the preferred example of the present invention. In this example, deaerating hollow fibers are arranged on the inside of the filter unit, and a filter element for removing solid matters is arranged on the outside of the hollow fibers. However, it is apparent to those skilled in the art that the deaerating hollow fibers may be arranged in an outer peripheral portion and the filter element for removing solid matters may be arranged on the inside of the hollow fibers. In this case, the positions of an inlet port, delivery port, and suction port for treatment fluid can be corrected appropriately.

Also, in the example described below, a deaerating part formed by the hollow fibers is provided on the upstream side, and a filtration part formed by the filter element is provided on the downstream side. However, as described above, the filter element may be provided on the upstream side and the deaerating part formed by the hollow fibers may be provided on the downstream side.

Referring to Figure 1, the filter unit includes a fluid-tight vessel part consisting of a housing 1 and a head part 3. In the case where the housing 1 and the head part 3 are made of a synthetic resin, these elements are butted against each other and the peripheral edge portions thereof are welded to each other, by which these elements are integrated by a welding part 11. Alternatively, in the case where a metallic housing made of a synthetic resin or a stainless steel is used, the peripheral edge portions thereof can be fixed to each other by tightening with an appropriate seal member therebetween. Within the housing 1, the deaerating part 15 formed by the deaerating hollow fibers is arranged in the center, and the filter element (filtration part) 13 is arranged at the outer periphery of the deaerating part 15.

### (Head part)

In the center of the head part 3, the treatment fluid inlet port 5 is formed, and in the outside portion thereof, the filtrated fluid delivery port 7 and the suction port 9 connected to an outside decompression source such as a suction pump are formed. When the treatment fluid is pressurized, the suction port need not be connected to the decompression source. On the lower surface side of the head part 3, there are formed a treatment fluid flow path 35 leading from the treatment fluid inlet port 5 to the outside of the hollow fibers (described later) constituting the hollow fiber deaerating part 15, a filtrated fluid flow path 41 for allowing the filtrated fluid flow path formed between the outer peripheral portion of the filter element 13 and the housing 1 to communicate with the filtrated fluid delivery port 7, and a gas flow path 37 for allowing the internal passage of the hollow fibers to communicate with the suction port 9.

### (Hollow fiber deaerating part)

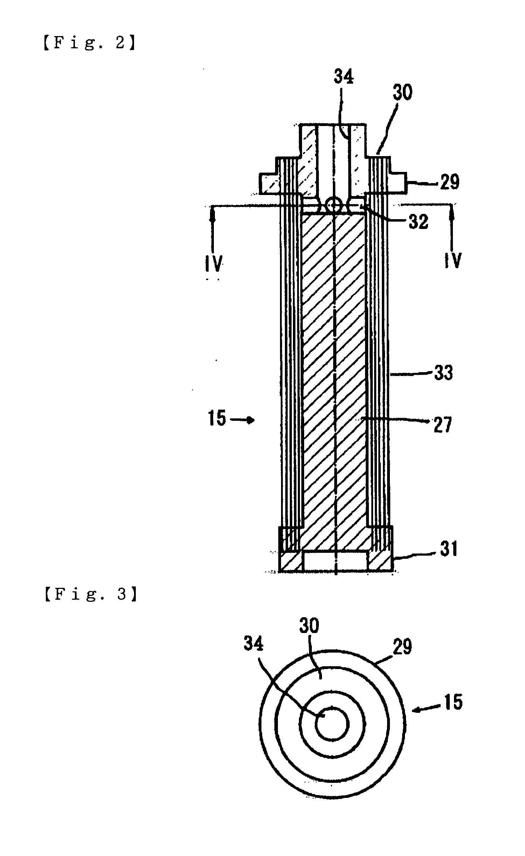

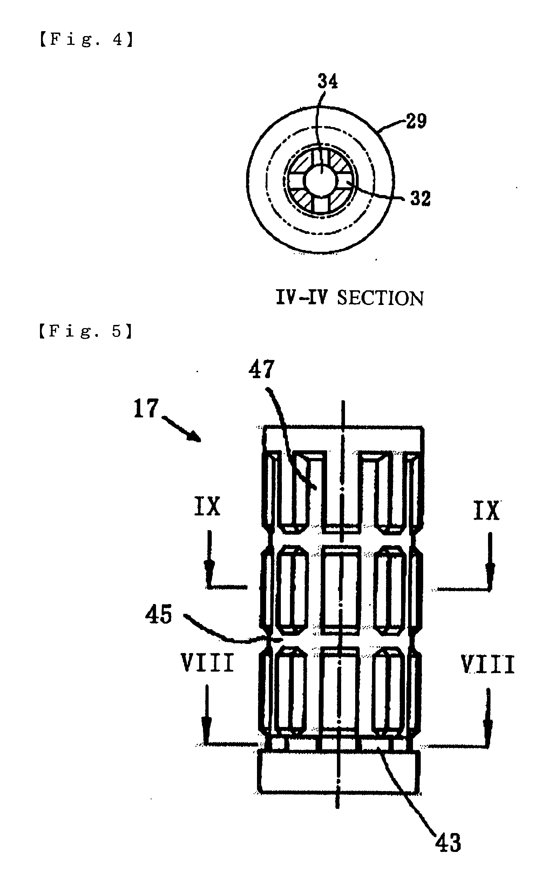

The details of the hollow fiber deaerating part 15 housed in a central portion of the housing 1 are explained with reference to Figures 1 to 4. The hollow fiber deaerating part 15 includes a column 27 extending along the axis of the housing 1. In the upper and lower end portions of the column, a large-diameter parts 29 and 31 are provided, respectively, and on the upper end side of the column 27, there are provided a passage 34 aligned with the treatment fluid flow path 35 in the head part 3 and a plurality of passages 32 that extend radially from the lower end of the passage 34 and open to the peripheral surface of the column 27.

Around the column 27, the plurality of hollow fibers (hollow fiber bundle) 33 extending along the column are arranged. The lower end portion of the hollow fibers 33 is embedded in the large-diameter part 31, and the internal passage of the hollow fibers is closed by sealing. The upper end portion of the hollow fibers 33 is embedded in the large-diameter part 29 in a penetrating state, and the internal passage of the hollow fibers leads from an opening 30 to a gas flow path 36. The gas flow path 36 communicates with the suction port 9 via the flow path 37 in the head part. As the hollow fibers 33, a membrane that allows the permeation of a gas forming a gas dissolved in the treatment fluid under pressure or air bubbles is used. For example, PTFE (polytetrafluoroethylene) can be used.

### (Fluid path forming cylinder)

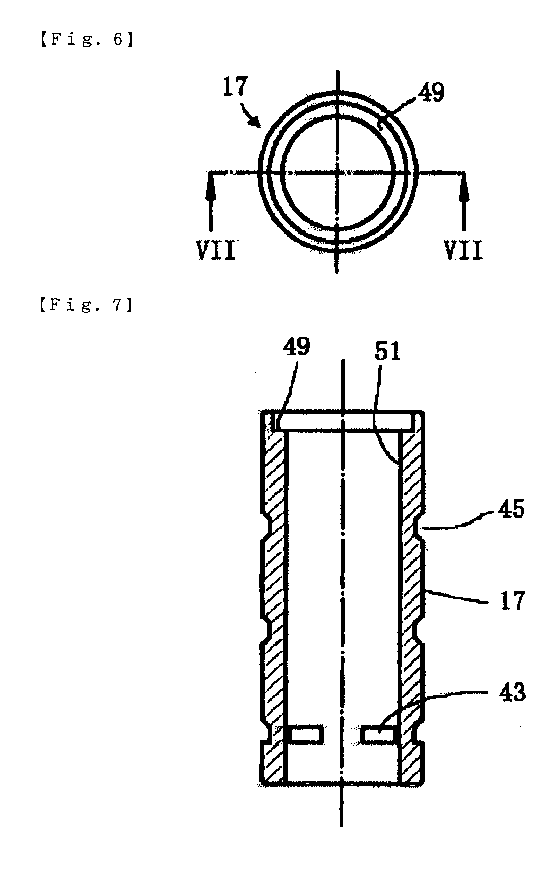

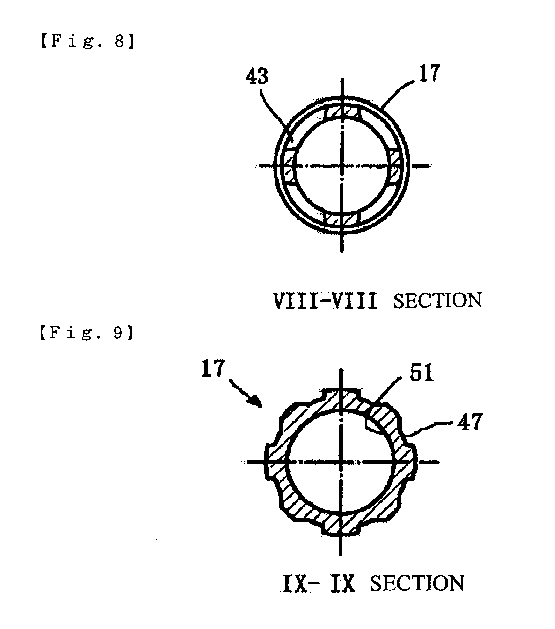

Around the hollow fiber deaerating part 15, a cylinder 17 for forming a flow path is provided. As shown Figures 1 and 5 to 9, an inner surface 51 of the cylinder 17 forms, together with the outer peripheral surface of the column 27, a flow path in which the treatment fluid flows around the hollow fiber deaerating part 15, and the outer surface of the cylinder 17 has distribution passages 45 (horizontal) and 47 (vertical) that are arranged in a lattice form to guide the deaerated treatment fluid to the inside of the filter element 13. In the lower end portion of the cylinder 17, a plurality of openings 43 are provided to guide the deaerated treatment fluid to the distribution passages 45 and 47 on the filter element 13 side.

The cylinder 17 is also used as an inside support member for the filter element 13 as described below.

### (Filter element)

As shown in Figure 1, the filter element 13 for removing solid matters such as particulate substances is made up of a pleated filtering material 19 arranged on the outer peripheral surface of the cylinder 17, porous external cylinders 21 arranged around the filtering material 19, and an upper lid 23 and a lower lid 25 that seal the upper and lower ends of the filtering material 19 in a fluid -tight manner, respectively. The filtering material 19 is formed by putting a net or nonwoven fabric cloth for forming a flow path along both surfaces of a micro -porous filter membrane consisting of a general filter material such as PTFE or polyethylene, by bending it into a pleat form to form a ring shape, and by lapping both side edges to seal them. Further, the upper and lower edges of the filtering material 19 are thermally sealed with respect to the upper and lower lids 23 and 25, respectively. The inside cylinder 17 and the porous external cylinder 21 provide a flow path, and also reinforce and support the filtering material 19 that is susceptible to buckling.

One example of assembling of the filter unit in accordance with the present invention is described below. It is assumed that the housing 1, the head part 3, the hollow fiber deaerating part 15, and the filter element 13 (in a state before the upper lid 23 is sealingly attached) are in the state of having been manufactured.

First, the hollow fiber deaerating part 15 is inserted from the upside into in the internal hole of the flow path forming cylinder 17 constituting a part of the filter element 13. Design has been made so that the outside diameter of the large-diameter part 31 in the lower end portion of the column 27 of the hollow fiber deaerating part 15 is slightly smaller than the inside diameter of the cylinder 17. The upper large-diameter part 29 is positioned by a shoulder 49 provided at the upper end of the cylinder 17.

Next, the upper edge of the filtering material 19 is sealingly attached to the upper lid 23, by which the hollow fiber deaerating part 15 and the filter element 13 are formed into an integrated structure. This structure is inserted into the housing 1. The head part 3 is fixed to the housing 1 by thermally sealing or tightening means, by which the filter unit is completed.

### (Operation)

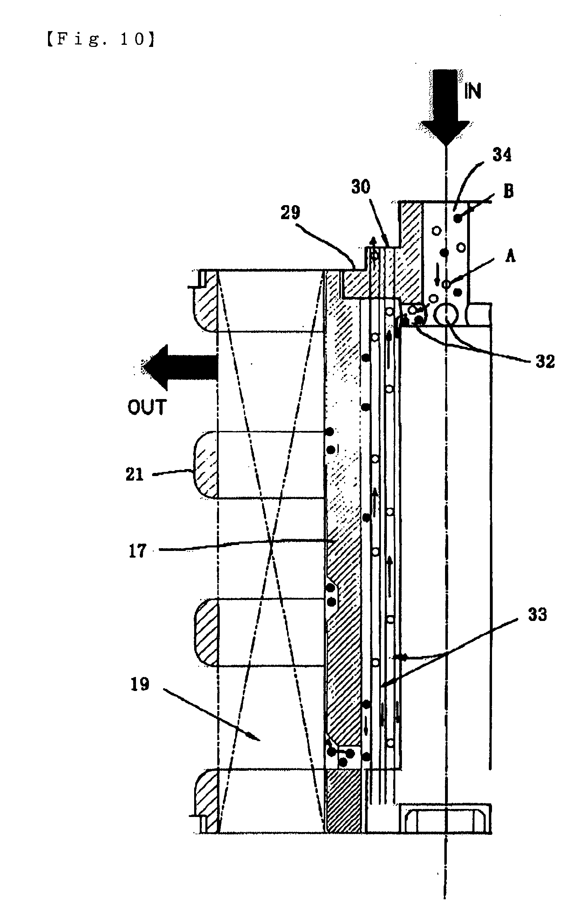

The operation is explained with reference to Figures 1 and 10. A pressurized treatment fluid supplied through the inlet port 5 flows into the upper end portion of the ring-shaped flow passage formed between the column 27 and the inner surface 51 of the cylinder 17 through the treatment fluid flow path 35, the passage 34, and the radial passage 32. The treatment fluid is deaerated gradually while being in contact with the outer surface of the hollow fibers 33 during the downward flow of treatment fluid. A permeating gas is attracted upward in the internal passage of the hollow fibers 33 as indicated by white circles in Figure 10, and is drawn out through the suction port 9 after passing through the passages 36 and 37. On the other hand, the deaerated treatment fluid passes through the opening 43 of the cylinder 17 in the lower end portion of the hollow fibers 33 and is distributed to the upstream surface of the filtering material 19 by the guide grooves 45 and 47 formed in the outer peripheral surface of the cylinder 17, and is filtrated by the filtering material 19.
Black circles in Figure 10 indicate solid matters such as particles. On the other hand, the filtrated fluid passes through the pores in the porous external cylinders 21, flowing upward in the flow path formed between the housing 1 and the outer peripheral portion of the filter element 13, and flows out through the delivery port 7 as a deaerated filtrated fluid after passing through the flow path 41.

In the above-described example, the treatment fluid is introduced through the inlet port in the central portion of the head, and the treated filtrated fluid is discharged through the delivery port provided in the peripheral portion of the head. However, inversely, the treatment fluid can be introduced through the delivery port provided in the peripheral portion of the head, which serves as the inlet port in this case, being deaerated through the deaerating mechanism part after being filtrated, and can be discharged through the inlet port in the central portion. In this case, since the treated fluid can be taken out from the center as in the conventional example, the filter unit can be used without a sense of strangeness.

Further, as another example, reverse to the configuration in which the deaerating mechanism is provided in the filter element as in the above-described example, the configuration may be such that the deaerating mechanism part is provided on the outside of the filter element, and the ordinarily used filter element is used as it is or with a similar construction. Specifically, the deaerating mechanism part formed by the hollow fibers is provided so as to surround the conventional filter element, by which the present invention can be configured easily as another example.

### Description of Symbols

- 1: housing
- 3: head part
- 5: treatment fluid inlet port
- 7: filtrated fluid delivery port
- 9: suction port
- 11: welding part
- 13: filter element (filtration part)
- 15: hollow fiber deaerating part
- 17: cylinder
- 19: filtering material
- 21: porous external cylinder
- 23: upper lid
- 25: lower lid
- 27: column
- 29, 31: large-diameter part
- 32: a plurality of passages
- 33: hollow fibers
- 34: inlet passage
- 35: treatment fluid flow path
- 36, 37: gas flow path
- 41: filtrated fluid flow path
- 45, 47: distribution passage
- 49: shoulder
- 51: cylinder inner surface

## Claims

1. A filter unit comprising a head part having a treatment fluid inlet port, a filtrated fluid delivery port, and a deaerating suction port; a housing integrally or detachably connected, in a fluid-tight manner, to the head part; a deaerating part including a plurality of deaerating hollow fibers, which is housed in the housing; and a filter element housed in the housing on the upstream or downstream side of the deaerating part, wherein the inlet port communicates with the upstream side of the housing; the delivery port communicates with the downstream side of the housing; and the suction port communicates with an internal passage of the hollow fibers.

2. A filter unit comprising a head part having a treatment fluid inlet port, a filtrated fluid delivery port, and a deaerating suction port; a housing integrally or detachably connected, in a fluid-tight manner, to the head part; a deaerating part including a plurality of deaerating hollow fibers, which is housed on the upstream side of the housing; and a filter element housed in the housing on the downstream side of the deaerating part, wherein the inlet port communicates with the outer surface side of the hollow fibers; the delivery port communicates with the downstream side of the filter element; and the suction port communicates with an internal passage of the hollow fibers.

3. The filter unit according to claim 2, wherein the deaerating part comprises a column extending vertically along the axis of the housing; a large-diameter parts formed integrally in the upper and lower end portions of the column; a nd a plurality of hollow fibers that are supported by the large-diameter parts and extend along the column.

4. The filter unit according to claim 3, wherein on the upper end side of the column, there are provided a longitudinal passage aligned with a treatment fluid inlet flow path in the head part and a plurality of transverse passages that extend radially from the lower end of the longitudinal passage and open to the peripheral surface of the column.

5. The filter unit according to claim 3 or 4, wherein the lower end portion of the plurality of hollow fibers is embedded in the large-diameter part in the lower end portion and is sealed; the upper end portion of the hollow fibers is embedded in the large-diameter part in the upper end portion in a penetrating state; and internal holes of hollow fibers communicate with the suction port.

6. The filter unit according to any one of claims 3 to 5, wherein around the hollow fibers, a cylinder forming a flow path for a treatment fluid is provided between the column and the hollow fibers; in the lower end portion of the cylinder, a plurality of openings are provided to guide the deaerated treatment fluid to the filter element; and further the outer surface of the cylinder has distribution passages that are arranged in a lattice form to guide the deaerated treatment fluid to the surface on the upstream side of the filter element.

7. The filter unit according to claim 6, wherein the filter element for removing solid matters such as particulate substances comprises a pleated filtering material arranged on the outer peripheral surface of the cylinder; porous external cylinders arranged around the filtering material; and an upper lid and a lower lid that seal the upper and lower ends of the filtering material in a fluid -tight manner, respectively, and the inner surface of the filtering material is supported by the outer peripheral surface of the cylinder forming a flow path for the treatment fluid.

8. The filter unit according to any one of claims 2 to 7, wherein the inlet port and the delivery port are connected reversely so that the inlet port is used as the delivery port, and the delivery port is used as the inlet port.
